# EUROPÄISCHE PATENTANMELDUNG

(11) **EP 0 933 181 A2**
(43) Veröffentlichungstag der Anmeldung: **04.08.1999**
(21) Anmeldenummer: 99101896.1
(22) Anmeldetag: 29.01.1999
(51) Int. Cl.: B29C 33/22, B29C 49/56

(54) **Schliessvorrichtung für Formen zum Herstellen von Gegenständen aus thermoplastischem Kunststoff**

(30) Priorität: 03.02.1998 DE 19804143
(71) Anmelder: Fischer-W. Müller Blasformtechnik GmbH, 53842 Troisdorf (DE)
(72) Erfinder: Maier, Rudolf, 53797 Lohmar (DE)
(74) Vertreter: Valentin, Ekkehard, Dipl.-Ing.

(57) **Zusammenfassung**

Bei einer Schließvorrichtung für Formen zum Herstellen von Gegenständen aus thermoplastischem Kunststoff, insbesondere zum Blasformen von Hohlkörpern auf Blasformmaschinen, mit einem aus zwei linear verschiebbar angeordneten Formhälften bestehenden Formwerkzeug, wobei die Formhälften durch einen Kraftantrieb zueinander gegenläufig bewegbar sind, werden unsymmetrische Schließkraftdeformationen ausgeschlossen, wenn jede Formhälfte in einem Joch angeordnet ist und beide Joche von dem Kraftantrieb direkt beaufschlagt sind.

## Beschreibung

Die Erfindung betrifft eine Schließvorrichtung für Formen zum Herstellen von Gegenständen aus thermoplastischem Kunststoff, insbesondere zum Blasformen von Hohlkörpern auf Blasformmaschinen, mit einem aus zwei linear verschiebbar angeordneten Formhälften bestehenden Formwerkzeug, wobei die Formhälften durch einen Kraftantrieb zueinander gegenläufig bewegbar sind.

Eine durch die DE-A1 37 22 340 bekanntgewordene Schließeinheit dieser Art besitzt einen aus mindestens einer Zugstange, einer Druckstange sowie zwei diese an ihren Enden miteinander verbindenden Jochen bestehenden Rahmen, bei dem die Zug- und Druckstangen parallel und die Joche quer zur Verschieberichtung der die Formhälften tragenden Formaufspannplatten verlaufen. Hierbei greift das eine Joch mit einem Kragarm unmittelbar an der einen Formaufspannplatte an, während das andere Joch durch den zwischengeschalteten Kraftantrieb mit der zweiten Formaufspannplatte verbunden ist. Der Rahmen mit dem Kraftantrieb ist an einem raumfesten Gehäuse aufgehängt, das gesonderte, vom Rahmen unabhängige Führungsholme trägt und bei dem die Joche des Rahmens zumindest an den Formaufspannplatten und/oder am zwischengeschalteten Kraftantrieb über Stützglieder angreifen, deren Achsebenen auf der Wirkungslinie der Schließkraft zwischen beiden Formaufspannplatten liegen. Hierdurch wird erreicht, daß die Führung für die Formaufspannplatten und die Mittel zur Schließkraftaufbringung in zweckentsprechender Weise und gleichzeitig platzsparend voneinander entkoppelt werden. Der die Schließkraftübertragung bewirkende Rahmen kann sich ohne nachteiligen Einfluß auf die Führung der Formaufspannplatten frei verformen. Die exakte gegenläufige Verstellbewegung der Formaufspannplatten bleibt daher auch dann erhalten, wenn sich der Rahmen unter dem Einfluß der Schließkraftwirkung verformt, weil die Gleichlaufvorrichtung an einer Stelle mit diesem Rahmen gekoppelt ist, die keinerlei Verformungskräften unterliegt.

Die Gleichlaufvorrichtung dient dazu, daß die beiden Formaufspannplatten der Schließvorrichtung und folglich auch die von diesen getragenen Formhälften des Formwerkzeuges bei Betätigung des den Schließmotor bildenden Kraftantriebs, z.B. eine hydraulische oder pneumatische Kolben-Zylinder-Einheit, zueinander gegenläufig synchron relativ zu einer vorgegebenen Kalibrierposition bewegt werden können. Solche Schließeinheiten werden außerdem in bekannter Weise mit Hilfe eines besonderen Transportsystems zwischen zwei verschiedenen Arbeitsstationen, nämlich einer Schlauchextrusions- und einer Blasstation, hin- und herbewegt.

Die bekannte Schließeinheit weist allerdings eine der beim Schließkraftaufbau nachteiliger Beaufschlagung des von der Krafteinleitung her gesehen hinteren Joches auf, so daß eine aufwendige Konstruktion erforderlich ist, um die Führung und den Gleichlauf nicht unnötig zu belasten und unsymmetrische Schließkraftdeformationen zu vermeiden.

Der Erfindung liegt daher die Aufgabe zugrunde, eine gattungsgemäße Schließvorrichtung ohne die genannten Nachteile, insbesondere mit einfachem Aufbau zu schaffen und dabei gleichwohl unsymmetrische Schließkraftdeformationen sicher auszuschließen.

Diese Aufgabe wird erfindungsgemäß dadurch gelöst, daß jede Formhälfte in einem Joch angeordnet ist und beide Joche von dem Kraftantrieb direkt beaufschlagt sind. Hierdurch läßt sich eine Schließeinheit erreichen, bei der kraftmäßig keine Hebelwirkung auf der Seite des vom Kraftangriff gesehen hinteren Jochs auftritt. Wegen des zur Führung erreichten symmetrischen Schließkraftaufbaus aufgrund des erfindungsgemäß in der Führungsebene liegenden, direkt auf die Joche wirkenden Kraftantriebs bleibt die Führung unbelastet. Die symmetrische Krafteinleitung verhindert gleichzeitig ein Wegwandern der Formhälften aus der Kalibrier- und Schließposition, da etwaige Schließkraftdeformationen bei beiden Jochen gleich und somit auch völlig symmetrisch bezogen auf den Gleichlauf der Schließeinheit sind. Schließlich läßt sich die Konstruktion der Schließeinheit wesentlich leichter ausführen, da gegenüber herkömmlichen Schließvorrichtungen, die zwei Joche mit diese verbindenden Zug- und Druckstangen zur Krafteinleitung auf das vom Kraftantrieb gesehen hintere Joch haben, diese Massen entfallen. Zusätzlich sind im Gegensatz zu diesen herkömmlichen Schließsystemen die zu bewegenden Massen für beide Formhälften mit Aufspannplatten, Joche etc. gleich, was zu gleichen Beschleunigungskräften führt und den Gleichlauf entlastet.

Eine Ausführung der Erfindung sieht vor, daß der eine die beiden Joche durchdringende, in einem Führungsholm gelagerte und mit einem Ende in einem Joch festgelegte Zugstange aufweisende Kraftantrieb auf einem Schließschlitten angeordnet ist und direkt an das in Kraftrichtung vorne liegende Joch angreift, während die den Führungsholm durchsetzende Zugstange direkt kraftsymmetrisch auf das hintere Joch wirkt. Bei hydraulischer oder pneumatischer Beaufschlagung des Schließzylinders, in welchem Fall vorzugsweise dessen Kolbenstange die einseitig fest mit einem Joch verbundene Zugstange darstellt, werden aufgrund des sich verstellenden Schließschlittens und der damit einhergehenden kraftsymmetrischen Einwirkung über die Zugstange auf das hintere Joch die beiden Joche gegenläufig aufeinanderzubewegt bzw. beim Öffnen der Formhälften voneinander entfernt. Der die Zugstange konzentrisch umschließende Führungsholm wird dabei ebenfalls von dem Schließschlitten getragen.

Nach einem Vorschlag der Erfindung weist die Schließvorrichtung einen parallel zu und unterhalb der Zugstange verlaufenden, in den von den die Formhälften tragenden oberen Jochkragarmen entfernten unteren Jochkragarmen angeordneten, mit einem zwischen den Jochen einstellbaren Anschlag versehenen, in einer besonderen Ausführung als Gleichlaufstange ausgebildeten Holm auf, der einseitig in einem der unteren Jochkragarme festgelegt ist. Das freie, d.h. nicht festgelegte Ende der Gleichlaufstange läßt sich hierbei mit einem Gleichlaufgetriebe ausrüsten, z.B. ein gleichzeitig mit einem zahnstangenartig ausgebildeten Abschnitt der Gleichlaufstange und einem zahnstangenartigen Abschnitt einer Gleichlaufleiste des Schließschlittens kämmendes Zahnrad. Der auf der Gleichlaufstange beispielsweise über eine Schraubverbindung einstellbare Anschlag ermöglicht es, Formdickentoleranzen auszugleichen und so die Symmetrierung der Schließkrafteinbringung durch den einen Kraftantrieb sicherzustellen. Es kann sich im übrigen empfehlen, den Anschlag mit einer elastischen Federkomponente, z.B. eine Druckdose oder ein Federpaket, auszurüsten, um auf diese Weise eine Anpasung an gegebenenfalls unterschiedlich starke Butzen des Blasform-Gegenstandes zu ermöglichen.

Eine andere, eine ausschließlich elektromotorische Schließkraftaufbringung ermöglichende Ausführung der Erfindung sieht vor, daß der Kraftantrieb als Hohlwellen-Servoantrieb ausgebildet ist, bei dem das vordere Ende der Zugstange in einem Kugelgewindetrieb angeordnet ist und dem hinteren Ende der Zugstange eine das hintere Joch beaufschlagende Krafteinheit zugeordnet ist. Gegenüber einem hydraulischen oder pneumatischen Schließkraftaufbau bringt ein elektrischer Antrieb den Vorteil eines geringeren Energieverbrauchs und einer weniger aufwendigen Regelungstechnik sowie einer wesentlich leiseren Betriebsweise mit sich, wobei zudem keine Ölleckagen auftreten können. Beim Einsatz eines Kugelgewindetriebes wird die Schließkraft dann letztendlich allerdings über ein elastisches Element eingebracht, nämlich die das hintere Joch beaufschlagende Krafteinheit, die zweckmäßig als vorgespannte Feder oder als hydraulische Druckdose mit vorgespanntem Druckspeicher ausgeführt sein kann. In dieser Ausführung läßt sich die Krafteinheit mit einem vorteilhaften gesteuerten Resthub betreiben. Dabei wird nach Beendigung des Schließvorgangs über den Kugelgewindetrieb bzw. Elektroantrieb, wobei noch nicht die völlige Schließposition erreicht wird, vielmehr ein Restweg (z.B. 0,2 mm) übrigbleibt, der verbleibende Resthub von der dem hinteren Joch zugeordneten Krafteinheit bewältigt. Mit dem solchermaßen für den Resthub eingesetzten gesteuerten Schließkraftaufbau läßt sich berücksichtigen, daß die zulässigen statischen Lasten für den Kugelgewindetrieb wesentlich höher als die dynamischen Lasten sind. Aufgrund des somit "weichen" Elementes am anderen Antriebsende fährt der Hohlwellen-Servoantrieb mit dem Kugelgewindetrieb bei der axialen Verstellung nicht sofort auf einen die endgültige Schließposition definierenden Anschlag, sondern bewältigt sehr schnell den großen Anstellweg, während die Schließkraft dann von der anderen Seite her hydraulisch aufgebracht wird.

Nach einer bevorzugten Ausgestaltung der Erfindung ist einerseits das vordere Ende der Zugstange und andererseits das vordere Joch mit Hebelarmen eines dem Kugelgewindetrieb zugeordneten Kniehebel-Systems verbunden. Die beiden anderen Enden der Kniehebel haben einen gemeinsamen Anlenkpunkt in einer Gewindemutter des Kugelgewindetriebs, so daß sie sich beim Beaufschlagen des Servomotors und der damit eingeleiteten Rotation der Kugelrollspindel über die Gewindemutter in einfacher Weise aus ihrer Knicklage in die Strecklage bewegen und damit die Joche bzw Formhälften in die Schließposition verstellen und umgekehrt. Ein zwischen dem hinteren Joch und dem hinteren Ende der Zugstange angeordnetes vorgespantes Federpaket verhindert dabei ein Zufahren mit ansonsten unendlicher Kraft des Kniehebel-Systems. Die Position des Federpaketes relativ zur Zugstange läßt sich darüberhinaus einstellen, womit sich gleichzeitig berücksichtigen läßt, daß nicht immer eine gleiche Dicke der Blasformen vorliegt.

Nach einem Vorschlag der Erfindung ist das Kniehebelsystem in einem Rahmen angeordnet, der mit einer Führung in einem seinerseits mit einer Führung auf einer Transportplatte der Schließvorrichtung angeordneten Rahmen lagert. Die somit beweglich ineinandergeschachtelten Rahmen gewährleisten die gegenläufige Verstellung der beiden Joche bzw. Formhälften, wobei die Linearführungen in vorteilhafterweise die vom Kniehebel-System her auftretenden Querkräfte aufnehmen. Die Verwendung eines Kniehebelantriebs bringt auch den Vorteil mit sich, daß eine besondere Gleichlaufvorrichtung entfallen kann.

Weitere Einzelheiten und Vorteile der Erfindung ergeben sich aus den Ansprüchen und der nachfolgenden Beschreibung, in der einige Ausführungsbeispiele des Gegenstandes der Erfindung näher erläutert sind. Es zeigen:
- Fig. 1: in der Seitenansicht eine Ausführung einer Schließvorrichtung einer weiter nicht dargestellten Blasformmaschine, bei der die Schließkraft mittels eines hydraulischen oder pneumatischen Schließzylinders direkt in zwei die Formhälften tragenden Joche eingeleitet wird, teilgeschnitten dargestellt;
- Fig. 2: eine der Fig. 1 entsprechende Darstellung einer Schließvorrichtung, bei der zur Krafteinleitung beim Schließkraftaufbau ein Hohlwellen-Servoantrieb mit Kugelgewindetrieb eingesetzt ist, teilgeschnitten dargestellt;
- Fig. 3: in teilgeschnittener Seitenansicht eine andere Ausführung einer Schließvorrichtung, die zur mittigen Krafteinleitung beim Schließkraftaufbau ein von einem elektrischen Servoantrieb verstellbares Kniehebel-System aufweist, in der geöffneten Position der Formhälften bzw. bei aufgefahrenen Jochen dargestellt;
- Fig. 4: die Schließvorrichtung gemäß Fig. 3 mit in die Schließposition bewegten Jochen; und
- Fig. 5: die Schließvorrichtung gemäß Fig. 4 in der Draufsicht.

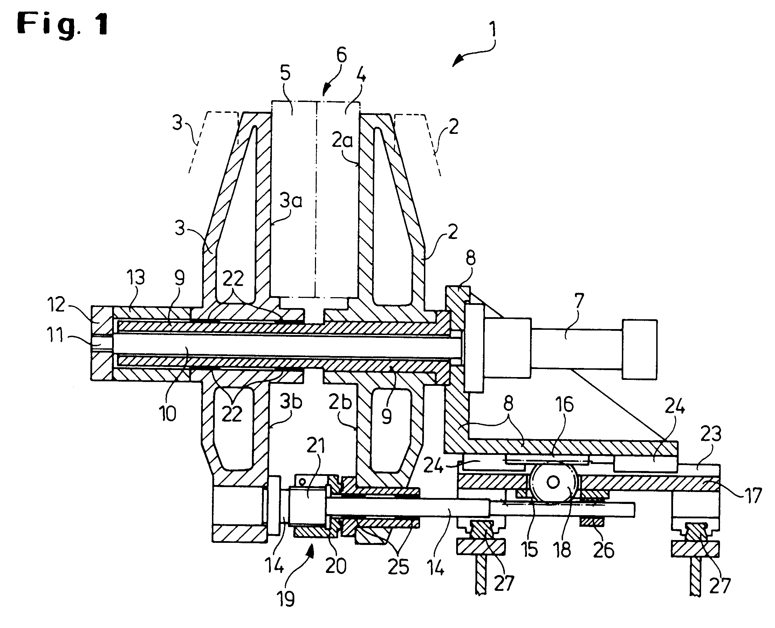

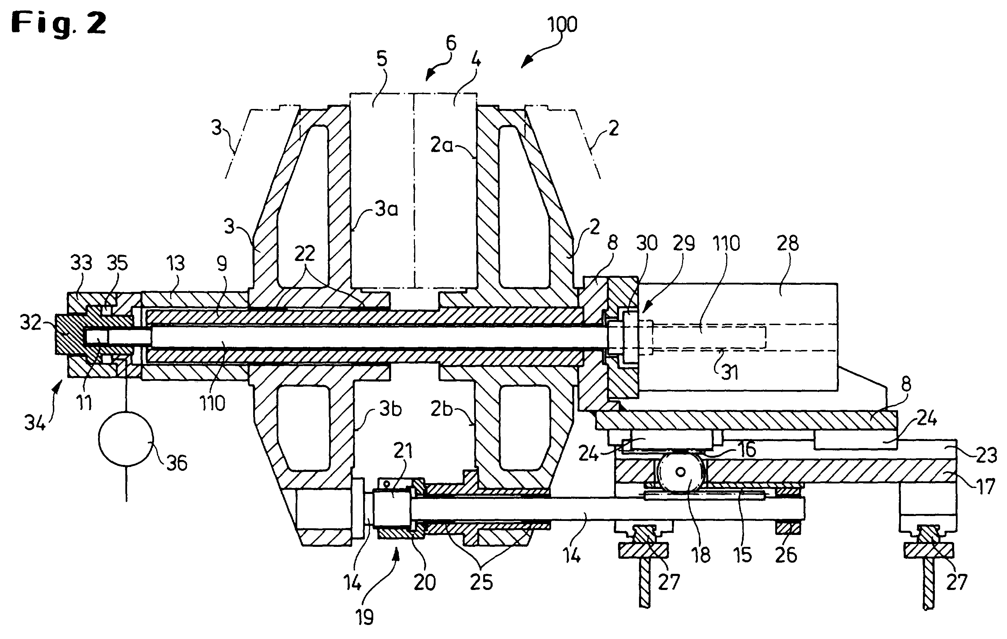

Eine in Fig. 1 als Einzelheit einer Blasformmaschine zum Herstellen von Gegenständen aus thermoplastischem Kunststoff gezeigte Schließvorrichtung 1 umfaßt ein vorderes und ein hinteres Joch 2 bzw. 3. Diese sind aus ihrer in der oberen Hälfte der Figur teilweise gestrichelt dargestellten Offenstellung in die Schließposition gefahren worden, in der die von den oberen Jochkragarmen 2a bzw. 3a getragenen Formhälften 4, 5 eines zweiteiligen Formwerkzeuges 6 einander bündig anliegen. Zum Verstellen der Joche 2, 3 dient bei dieser Ausführung ein hydraulischer Schließzylinder 7, der auf einem Schließschlitten 8 angeordnet ist; dieser trägt gleichzeitig einen in etwa zentral durch die Formaufspannjoche 2, 3 hindurchgeführten Führungsholm 9. Die hier als Zugstange 10 dienende Kolbenstange des Schließzylinders 7 durchsetzt den Führungsholm 9 und ist mit ihrem hinteren, von dem Antrieb entfernten Zugstangenende 11 in einen Abschlußdeckel 12 eines zylindrischen, kammerartigen Ansatzes 13 des hinteren Joches 3 eingeschraubt und darüber fest mit dem Joch 3 verbunden. Ein parallel unterhalb der Zug(Kolben-)Stange 10 angeordneter, hier als Gleichlaufstange 14 ausgebildeter Holm ist mit einem Ende in dem unteren Jochkragarm 3b festgelegt und durchdringt den unteren Jochkragarm 2b des gegenüberliegenden Joches 2 mit seinem freien Stangenende, das auf einem im Bereich unterhalb des Schließschlittens 8 liegenden Bereich mit einem - gegebenenfalls zum einfachen Austausch aufgesetzten, zum Beispiel mit der Gleichlaufstange 14 verschraubten (vgl. Fig. 2) - Zahnstangenabschnitt 15 versehen ist. Diesem ist eine zahnstangenartige Gleichlaufleiste 16 zugeordnet. Ein in einem die gesamte Schließvorrichtung 1 tragenden Transportwagen 17 gelagertes Zahnritzel 18 stellt durch seinen kämmenden Eingriff mit sowohl dem Gewindeabschnitt 15 der Gleichlaufstange 14 als auch der Gleichlaufleiste 16 des Schließschlittens 8 die bei Beaufschlagung des Schließzylinders 7 gegenläufige Verstellbewegung der Joche 2, 3 sicher.

Die Kraft des Schließzylinders 7 wird direkt symmetrisch in das vordere Joch 2 eingeleitet, während die den Führungsholm 9 durchsetzende Zug- bzw. Kolbenstange 10 direkt kraftsymmetrisch auf das hintere Joch 3 wirkt, so daß bei der Krafteinleitung keine Hebelwirkung und schließkraftbedingte Schrägstellung auf der Seite des hinteren Joches 3 entsteht, womit alle Führungen unbeeinflußt bleiben. Die exakte Schließposition wird mittels eines einstellbaren Anschlages 19 voreingestellt, der auf der Gleichlaufstange 14 zwischen den unteren Jochkragarmen 2b, 3b der beiden Joche 2, 3 angeordnet und als Schraubanschlag ausgebildet ist; dazu umgreift eine Gewindehülse 20 einen Gewindeabschnitt 21 der Gleichlaufstange 14. Neben dem Führungsholm 9 mit im Bereich des hinteren Joches 3 angeordneten Gleitführungen 22 übernehmen in einer Linearführung 23 des Transportwagens 17 angeordnete Führungsblöcke 24 des Schließschlittens 8 und im unteren Jochkragarm 2b sowie - für das vorkragende freie Gleichlaufstangenende - unterhalb des Transportwagens 17 angeordnete Gleitführungen 25 bzw. 26 die Führung des vorderen Joches 2. Der Transportwagen 17 ist auf Laufschienen 27 gelagert, so daß sich die gesamte Schließvorrichtung 1 mittels eines nicht dargestellten elektrischen oder hydraulischen Antriebes zwischen beispielsweise einer Schlauchextrusionsstation und einer Blasstation hin- und herbewegen läßt.

Die Schließvorrichtung 100 nach Fig. 2 unterscheidet sich in ihrem Aufbau und der Wirkungsweise, insbesondere hinsichtlich der direkt symmetrischen Krafteinleitung auf die die Formhälften 4, 5 tragenden Formaufspannjoche 2, 3, nicht von der vorbeschriebenen Ausführung, so daß übereinstimmende Bauteile mit denselben Bezugsziffern versehen sind. Unterschiedlich ist allerdings der Kraftantrieb zur Schließkraftaufbringung, denn statt eines hydraulischen oder pneumatischen Schließzylinders ist hier ein vollelektrischer Antrieb verwirklicht, der einen an den Schließschlitten 8 angeflanschten Hohlwellen-Servoantrieb 28 mit einem Kugelgewindetrieb 29 umfaßt; durch dessen Rotationsmutter 30 ist die in dem Führungsholm 9 angeordnete Zugstange 110 mit ihrem antriebsseitig freien, in den Hohlwellen-Servoantrieb 28 hineinragenden Gewinde-Stangenende 31 hindurchgeführt, während das entfernte Zugstangenende 11 in einem mit dem Ansatz 13 des hinteren Joches 3 verbundenen Aufnahmeblock 32 eines dort angeordneten elastischen Elementes in Form einer beispielsweise als hydraulische Druckdose 33 ausgebildeten Krafteinheit 34 eingeschraubt und damit festgelegt ist. Ein in der hydraulischen Druckdose 33 zwischen dem Aufnahmeblock 32 und dem Ansatz 13 des hinteren Joches 3 vorgesehener Zylinderraum 35 ist über eine Druckmittelleitung an einen vorgespannten Druckspeicher 36 angeschlossen. Bei dieser Ausführung werden mittels des elektromotorischen Hohlwellen-Servoantriebes 28 und des Kugelgewindetriebes 29 die Joche 2, 3 so weit aufeinanderzubewegt, daß die endgültige Schließposition erreicht und die Schließkraft aufgebracht wird. Das beschriebene vorgespannte elastische Element, das auch ein Federpaket sein kann, schützt den Kugelgewindetrieb 29 vor Überbeanspruchung. Alternativ bietet sich mit dieser Ausgestaltung die Möglichkeit, daß der Elektroantrieb die Blasform bis auf einen Restspalt schließt, wobei die Schließkraft dann hydraulisch gesteuert über den Zylinderraum 35 aufgebracht wird.

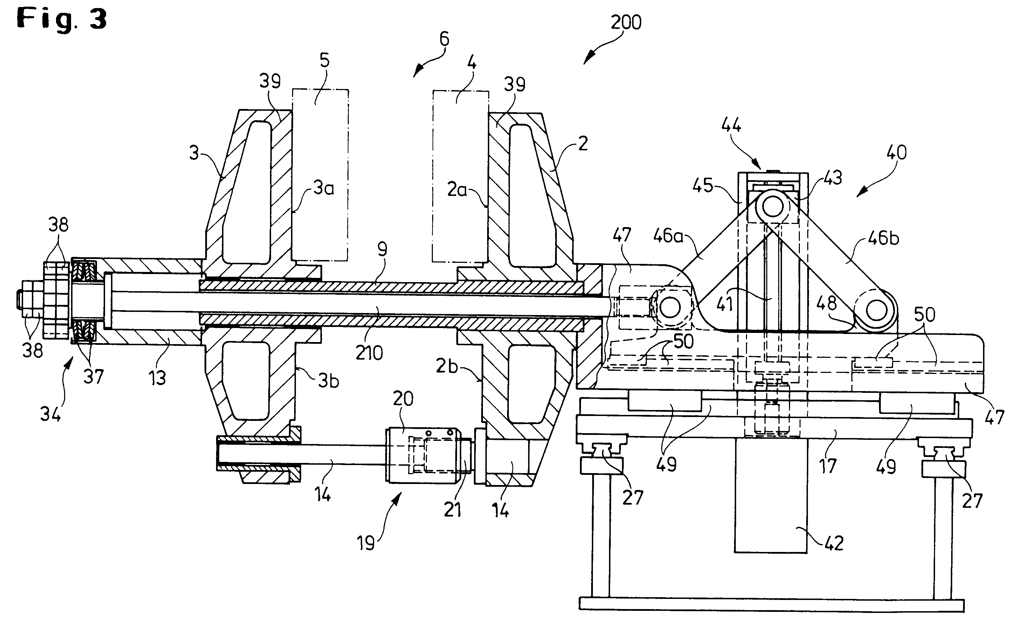

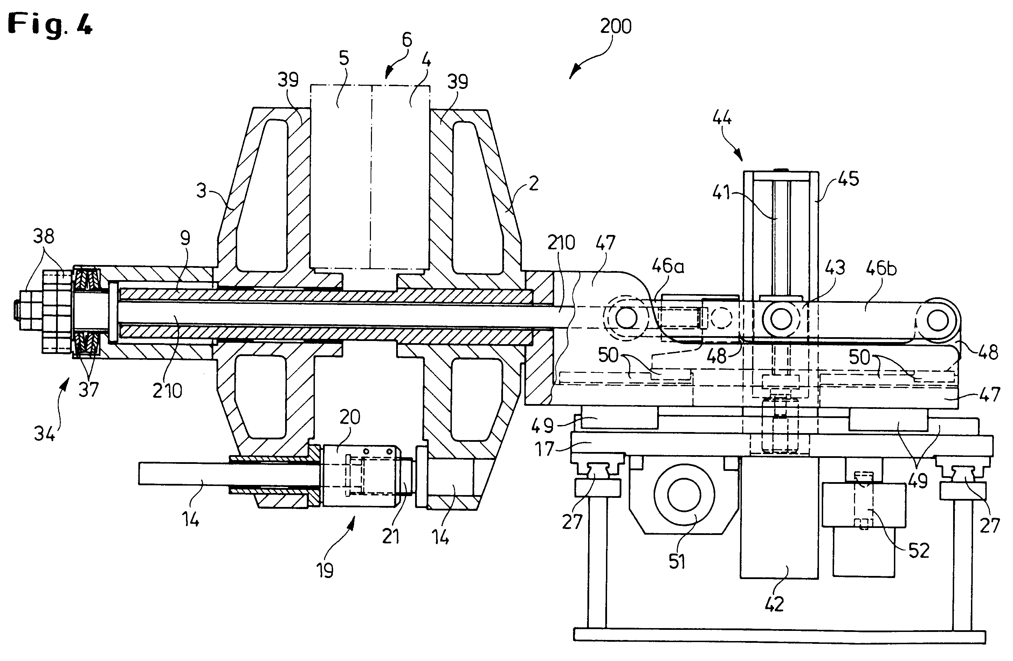

Der Aufbau und die Betriebsweise mit direkt symmetrischer Krafteinleitung in die beiden Joche 2, 3 der in den Fig. 3 bis 5 gezeigten weiteren Ausführung einer Schließvorrichtung 200 entsprechen - bis auf die Gleichlaustange 14 - wiederum den der vorbeschriebenen Schließeinheiten 1 bzw. 100, was durch die auch hier für die entsprechenden Bauteile wieder gleichen Bezugsziffern verdeutlicht wird; obwohl eine Gleichlaufvorrichtung hier nicht mehr erforderlich ist, wird der auch bei dieser Ausführungsform den einstellbaren Anschlag 19 aufweisende untere Holm ebenfalls mit 14 beziffert. Die den Führungsholm 9 durchsetzende Zugstange 210 ist in diesem Fall an ihrem hinteren Ende mit einem Federpaket 37 als Krafteinheit 34 vorgespannt, und zwar um ebenfalls einen Resthub zur Aufbringung der Schließkraft zu bewältigen. Die Vorspannung wird mittels Aufschraubmuttern 38 aufgebracht, die auf einen endseitigen Gewindeabschnitt der Zugstange 210 aufgeschraubt sind, wobei die Steigung dieses Gewindeabschnitts dem des einstellbaren Anschlags 19 entspricht, der den Zufahrweg der die Formhälften 4, 5 mittels Formspannplatten 39 aufnehmenden Joche 2, 3 auf den Resthub vor der Schließposition (vgl. Fig. 4) begrenzt.

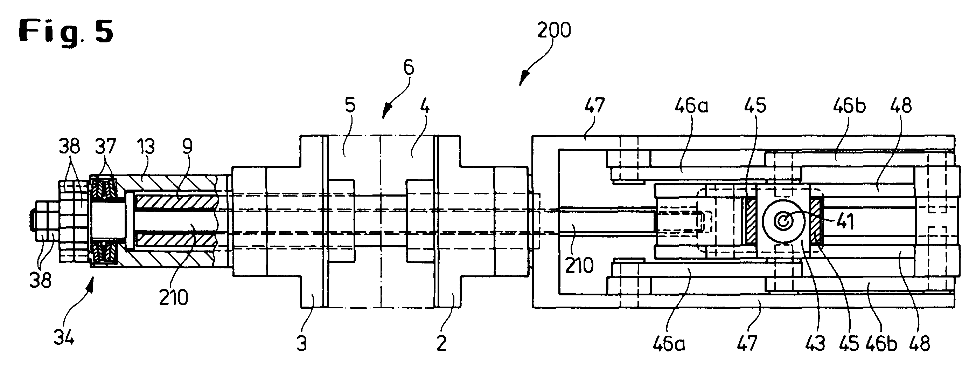

Zum Verstellen der Joche 2, 3 aus der in Fig. 3 gezeigten Öffnungslage in die Schließlage nach Fig. 4 ist hier ein Kraftantrieb eingesetzt, der aus einem Kniehebel-System 40 besteht, das eine Kugelrollspindel 41 und eine sich bei Betätigung eines elektromotorischen Servoantriebes 42 auf der Kugelrollspindel 41 in eine obere (vgl. Fig. 3) und in eine untere Position (vgl. Fig 4) verstellende Schraubmutter 43 umfaßt, d.h. diese Teile bilden einen Kugelgewindetrieb 44. Dieser wird in einem Traggerüst 45 aufgenommen. An einander gegenüberliegenden Seiten der Schraubmutter 43 sind die Kniehebel 46a bzw. 46b des Kniehebel-Systems 40 angelenkt (vgl. Fig. 5), deren andere Enden einerseits an einen die Zugstange 210 tragenden beweglichen Rahmen 48 - und zwar die Enden der Kniehebel 46b - und andererseits an einen den Rahmen 48 aufnehmenden, mit dem vorderen Joch 2 verbundenen Bewegungsrahmen 47 - und zwar die Kniehebel 46a - angelenkt sind. Der mit dem vorderen Joch 2 verbundene Rahmen 47 wird auf Linearführungen 49 des auf den Laufschienen 27 verfahrbaren Transportwagens (bzw. Transportplatte) 17 und der Rahmen 48 in Linearführungen 50 des Rahmens 47 geführt.

Zum Zufahren der Joche 2, 3 wird die Kugelrollspindel 41 von dem Servoantrieb 42 in Rotation gesetzt, worauf sich die Schraubmutter 43 aus der in Fig. 3 dargestellten Knicklage des Kniehebel-Systems 40 bis in die in Fig. 4 gezeigte Strecklage des Kniehebelsystems 40 nach unten schraubt. Der mit dem Joch 2 verbundene Rahmen 47 bewegt sich dabei - beaufschlagt von den sich streckenden Kniehebeln 46a - relativ zu dem Transportwagen 17 nach vorne, während gleichzeitig - beaufschlagt von den auf die Zugstange 210 einwirkenden Kniehebeln 46b - der Bewegungsrahmen 48 relativ zu dem Rahmen 47 nach hinten verstellt wird (vgl. Fig. 4 in Verbindung mit Fig. 3). Die Joche 2, 3 bewegen sich hierbei gegenläufig zueinander, ohne daß eine Gleichlaufvorrichtung erforderlich ist. Sobald der einstellbare Anschlag 19 und die Blasform bzw. das Formwerkzeug 6 die Zufahrbewegung der Joche 2, 3 beenden, übernimmt das mit der Schließkraft vorgespannte Federpaket 37 den Resthub und begrenzt die auftretende Kraft. Über die Darstellung nach Fig. 3 hinaus sind in Fig. 4 noch der Elektromotor 51 zum Hin- und Herverfahren der Schließvorrichtung 200 zwischen den beiden Arbeitsstationen und eine die Schließposition sichernde Endlagenverriegelung 52 gezeigt.

Allen Ausführungen ist gemeinsam, daß der Kraftantrieb - Schließzylinder 7 bzw. Hohlwellen-Servoantrieb 28 mit Kugelgewindetrieb 29 bzw. Kniehebel-System 40 mit Kugelgewindetrieb 44 - die Kraft zum Schließkraftaufbau direkt symmetrisch sowohl auf das vordere als auch auf das hintere Joch 2 bzw. 3 einleitet, womit eine schließkraftbedingte Schrägstellung des hinteren Joches 3 vermieden wird.

## Patentansprüche

1. Schließvorrichtung (1; 100; 200) für Formen zum Herstellen von Gegenständen aus thermoplastischem Kunststoff, insbesondere zum Blasformen von Hohlkörpern auf Blasformmaschinen, mit einem aus zwei linear verschiebbar angeordneten Formhälften (4, 5) bestehenden Formwerkzeug (6), wobei die Formhälften durch einen Kraftantrieb (7; 28, 29; 40, 44) zueinander gegenläufig bewegbar sind,
**dadurch gekennzeichnet,**
daß jede Formhälfte (4, 5) in einem Joch (2; 3) angeordnet ist und beide Joche (2, 3) von dem Kraftantrieb (7; 28, 29; 40, 44) direkt beaufschlagt sind.

2. Schließvorrichtung nach Anspruch 1,
**dadurch gekennzeichnet,**
daß der eine die beiden Joche (2, 3) durchdringende, in einem Führungsholm (9) gelagerte und mit einem Ende in einem Joch (2; 3) festgelegte Zugstange (10; 110; 210) aufweisende Kraftantrieb (7; 28, 29; 40, 44) auf einem Schließschlitten (8; 47, 48) angeordnet ist und direkt an das in Kraftrichtung vorne liegende Joch (2) angreift, während die den Führungsholm (9) durchsetzende Zugstange (10; 110; 210) direkt kraftsymmetrisch auf das hintere Joch (3) wirkt.

3. Schließvorrichtung nach Anspruch 1 oder 2,
**gekennzeichnet durch**
einen parallel zu und unterhalb der Zugstange (10; 110; 210) verlaufenden, in den von den die Formhälften (4, 5) tragenden oberen Jochkragarmen (2a, 3a) entfernten unteren Jochkragarmen (2b, 3b) angeordneten, mit einem zwischen den Jochen (2, 3) einstellbaren Anschlag (19) versehenen Holm, der einseitig in einem der unteren Jochkragarme (2b bzw. 3b) festgelegt ist.

4. Schließvorrichtung nach Anspruch 3,
**dadurch gekennzeichnet,**
daß der Holm als Gleichlaufstange (14) ausgebildet ist.

5. Schließvorrichtung nach einem der Ansprüche 2 bis 4,
**dadurch gekennzeichnet,**
daß bei einem hydraulischen oder pneumatischen Schließzylinder (7) als Kraftantrieb die Kolbenstange des Schließzylinders (7) die Zugstange (10) darstellt und fest mit dem hinteren Joch (3) verbunden ist.

6. Schließvorrichtung nach einem der Ansprüche 2 bis 4,
**dadurch gekennzeichnet,**
daß der Kraftantrieb als Hohlwellen-Servoantrieb (28) ausgebildet ist, bei dem das vordere Ende der Zugstange (110) in einem Kugelgewindetrieb (29) angeordnet ist und dem festgelegten hinteren Ende (11) der Zugstange (10) eine das hintere Joch (3) beaufschlagende Krafteinheit (34) zugeordnet ist.

7. Schließvorrichtung nach Anspruch 6,
**dadurch gekennzeichnet,**
daß einerseits das vordere Ende der Zugstange (210) und andererseits das vordere Joch (2) mit einem Hebelarm (46b bzw. 46a) eines dem Kugelgewindetrieb (44) zugeordneten Kniehebel-Systems (40) verbunden ist.

8. Schließvorrichtung nach Anspruch 7,
**dadurch gekennzeichnet,**
daß das Kniehebelsystem (40) in einem Rahmen (48) angeordnet ist, der mit einer Führung (50) in einem seinerseits mit einer Führung (49) auf einem Transportwagen (17) der Schließvorrichtung (200) angeordneten Rahmen (47) lagert.
